# EUROPÄISCHE PATENTSCHRIFT

(11) **EP 0 598 934 B1**
(45) Veröffentlichungstag und Bekanntmachung des Hinweises auf die Patenterteilung: **01.05.1996**
(21) Anmeldenummer: 92119905.5
(22) Anmeldetag: 23.11.1992
(51) Int. Cl.: G01D 5/14

(54) **Anordnung zur berührungsfreien Erfassung der Drehzahl bzw. Geschwindigkeit oder Position eines Geberteils**
Measuring device for the contactless determination of the rotational speed, respectively speed or position, of an object
Dispositif de mesure pour déterminer, sans contact, la vitesse de rotation respectivement la vitesse ou la position, d'un objet

(43) Veröffentlichungstag der Anmeldung: 01.06.1994
(73) Patentinhaber: SIEMENS AKTIENGESELLSCHAFT, D-80333 München (DE)
(72) Erfinder: Leiderer, Harald, Dipl.-Ing., W-8404 Wörth/Donau (DE)

(56) Entgegenhaltungen:
- EP-A- 0 419 040
- DE-A- 4 025 837

## Beschreibung

Anordnung zur berührungsfreien Erfassung der Drehzahl bzw. Geschwindigkeit oder Position eines Geberteils

Die Erfindung betrifft eine Anordnung zur berührungsfreien Erfassung der Drehzahl bzw. Geschwindigkeit oder Position eines Geberteils nach dem Oberbegriff des Anspruchs 1. Eine derartige Anordnung ist aus "Siemens-Bauteile-Informationen", 10(1972), Heft 5, Seiten 129 bis 132, insbesondere Bild 1 und Bild 5 bekannt.

Der bekannte Differential-Hallgeber besteht aus zwei Hallelementen, die auf der einen Seite einer Trägerplatte befestigt sind, an deren anderer Seite ein Permanentmagnet angeordnet ist. Dessen Magnetfeld durchsetzt beide Hallelemente gleichzeitig mit der gleichen Feldstärke. Bewegt man ein weichmagnetisches Teil an den Hallelementen vorbei, so werden je nach der Stellung dieses Teils die beiden Hallelemente beeinflußt. Dieser Einfluß ist am Ausgangssignal einer an die Hallelemente angeschlossenen Auswerteschaltung erfaßbar.

Sowohl für den statischen als auch für den dynamischen Fall (relativer Stillstand bzw. relative Bewegung zwischen Hallgeber und Geberteil) kann anhand des Differenzsignals des Differential-Hallgebers der Übergang Segment-Lücke bzw. Lükke-Segment erkannt werden. Im statischen Fall jedoch (Differenz = 0)kann nicht erkannt werden, ob sich der Differential-Hallgeber gerade über einem Zahn bzw. Segment oder über einer Lücke befindet.

Aus DE-A-4 025 837 ist eine dem bekannten Differential-Hallgeber äquivalente Ausführung bekannt, bei der eine Magnetfeld-Erzeugungseinrichtung vorgesehen ist, die aus wenigstens zwei in einem bestimmten Winkel zur Trägerplatte des Hallgebers angeordneten Magneten besteht und deren resultierendes Magnetfeld beide Hallelemente gleichzeitig mit der gleichen Flußdichte durchsetzt. Auch mit dieser Einrichtung ist nicht erkennbar, ob sich der Differential-Hallgeber gerade über einem Zahn bzw. Segment oder über einer Lücke befindet.

Aus EP 0 419 040 A1 ist ein auf magnetoresistivem Effekt beruhender Drehzahlgeber bekannt, bei dem mittels eines in einem Winkel zur Senkrechten auf die Trägerplattenebene angeordneten Magnetfeldes die in der Trägerplattenebene liegende Komponenten erzeugt werden, um durch Kalibration dieser Komponenten eine über den gesamten Drehzahlgeber gleich große magnetische Feldstärke zu erreichen.

Aufgabe der Erfindung ist es , die bekannte Anordnung so zu gestalten, daß nicht nur der Übergang von Segment zu Lücke oder umgekehrt erkannt werden kann, sondern auch, ob sich der Differential-Hallgeber gerade über einem Segment oder über einer Lücke befindet.

Diese Aufgabe wird erfindungsgemäß durch die im Anspruch 1 genannten Merkmale gelöst. Weitere Ausgestaltung ist Gegenstand der abhängigen Ansprüche.

Die Erfindung wird nachfolgend anhand eines in der Zeichnung dargestellten Ausführungsbeispiels näher erläutert.

Es zeigen:
- Figur 1: die Anordnung von Differential-Hallgeber und Geberteil im Vergleich zwischen bekannter und erfindungsgemäßer Ausführung und
- Figur 2: die Ausgangssignale dieser Anordnungen.

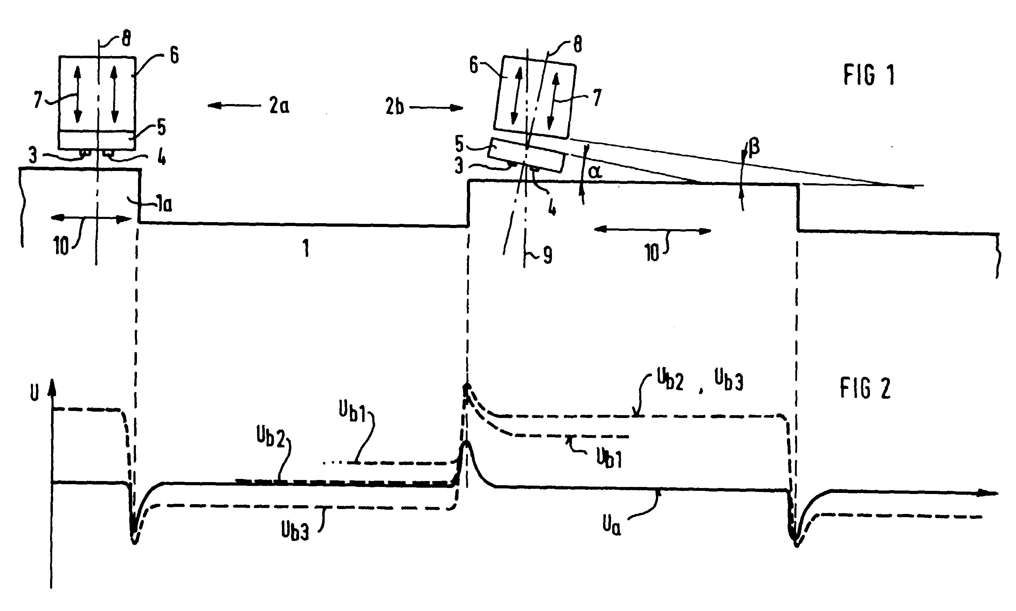

Anhand einer in Figur 1 dargestellten Differential-Hallgeber-Anordnung zur berührungsfreien Erfassung der Geschwindigkeit oder Position eines linear bewegbaren Geberteils 1 (das gleiche gilt für ein drehbares Geberteil) mit Segmenten la und dazwischenliegenden Lücken wird der erfindungsgemäße Differential-Hallgeber 2b erläutert und mit dem bekannten Differential-Hallgeber 2a verglichen.

Beide Differential-Hallgeber bestehen aus je einer Trägerplatte 5, auf deren dem Geberteil 1 zugewandten Seite zwei Hallelemente 3 und 4 befestigt sind. Auf der anderen Seite der Trägerplatte 5 ist ein Permanentmagnet mit einer durch zwei Pfeile angegebenen Magnetisierungsrichtung 7 angeordnet.

Der bekannte Differential-Hallgeber 2a ist so angeordnet, daß die Symmetrieachse 8 der Trägerplatte 5 und die Magnetisierungsrichtung 7 des Permanentmagneten 6 senkrecht zur Bewegungsrichtung 10 des Geberteils 1 angeordnet sind.

Aufgrund dieses symmetrischen Aufbaus entstehen an den beiden Hallelementen 3 und 4 gleiche Ausgangssignale und an der nachfolgenden Auswerteschaltung - die nicht dargestellt ist, aber aus der eingangs genannten Druckschrift entnommen werden kann - kein Differenzsignal, wenn beide Hallelemente zur Gänze über einem Segment oder über einer Lücke stehen. Das Ausgangssignal Uₐ dieses bekannten Differential-Hallgebers 2a ist in Figur 2 (durchgehende Linie) dargestellt. Diesem Signal ist lediglich zu entnehmen, ob sich der Hallgeber gerade am Übergang Segment-Lücke (negativer Impuls) oder Lücke-Segment (positiver Impuls) befindet, nicht aber, ob er voll über einem Segment oder über einer Lücke steht.

Beim Einschalten der Anordnung ist also stets abzuwarten, bis sich das Geberteil über eine solche "Unstetigkeitsstelle" hinwegbewegt, bevor eine entsprechende Feststellung getroffen werden kann.

Anders hingegen verhält es sich bei der erfindungsgemäßen Anordnung. Hier wird im einfachsten Fall bei gegenüber der bekannten Anordnung 2a unveränderter Lage der Trägerplatte 5 die Magnetisierungsrichtung 7 des Permanentmagneten 6 so verändert, daß sie mit der Normalen 9 auf die Bewegungsrichtung 10 einen vorgegebenen Winkel β - Magnetisierungs-Winkel -Winkel genannt - einschließt. Dies kann durch Kippen oder Anschrägen des Magneten 6 erfolgen. Durch diese Anordnung unterscheiden sich die Magnetfeldstärken an den beiden Hallelementen geringfügig und erzeugen auf diese Weise auch ein statisches Differenzsignal. Es ergibt sich ein Ausgangssignal U_{b1} des Differential-Hallgebers, wie es in Figur 2 (gestrichelt) dargestellt ist. Dabei haben das "Lücken"-Signal und das "Segment"-Signal gleiches Vorzeichen (beide positiv oder negativ) und unterscheiden sich auch in der Amplitude.

Eine größere Differenz beider Amplituden ist erreichbar, wenn der bekannte Differential-Hallgeber 2a um einen vorgegebenen Winkel α - Trägerplatten-Winkel genannt - gegenüber der Normalen 9 zur Bewegungsrichtung 10 des Geberteils 1 verdreht wird, so daß (mit β = α) die beiden Hallelemente 3 und 4 unterschiedliche Abstände von den Segmenten la bzw. Lücken erhalten. Dementsprechend entsteht ein Differenzsignal U_{b2}, in Figur 2 ebenfalls gestrichelt dargestellt. In diesem Fall wird das "Lücken"-Signal etwa zu Null, so daß die Differenz größer wird als bei den Ausgangssignalen Ub1.

Das "Lücken"-Signal kann sogar in den gegenüber dem "Segment"-Signal negativen Bereich gebracht werden (U_{b3} in Figur 2), wenn bei um den Trägerplatten-Winkel α gekippter Trägerplatte 5 die Magnetisierungsrichtung 7 des Permanentmagneten 6 um einen von α verschiedenen Magnetisierungs-Winkel β gegenüber der Normalen 9 auf die Bewegungsrichtung 10 des Geberteils 1 verdreht wird. Dieser letzte Fall ist in Figur 1 bei dem Differential-Hallgeber 2b dargestellt.

Von großem Vorteil ist, daß das Ausgangssignal 2b beim Wechsel von einem Segment zu einer Lücke oder umgekehrt sowohl statisch als auch dynamisch etwas über die Amplitude überschwingt, die es erreicht, wenn der Hallgeber voll über einer Lücke oder einem Segment steht. Dadurch wird in jedem Fall ein sicheres Umschalten eines nachfolgenden Komparators erreicht, insbesondere wenn dieser mit Hysterese schaltet.

Die für ein linear bewegbares Geberteil beschriebene Ausführung kann ohne weiteres auf ein um eine Achse drehbares Geberteil angewandt werden, wobei dann als Bewegungsrichtung 10 die Normale auf den durch den Mittelpunkt der Trägerplatte 5 gehenden Radius des Geberteils anzusehen ist.

Eine erprobte Ausführung mit einem drehbaren Segmentgeber von 180° Segmentlänge hat einen Trägerplatten-Winkel α= 10° und einen Magnetisierungs-Winkel β = 9°.

## Patentansprüche

1. Anordnung zur berührungsfreien Erfassung der Drehzahl bzw. Geschwindigkeit oder Position eines mit Zähnen oder wenigstens einem Segment (1a) versehenen, um eine Achse drehbaren oder linear bewegbaren Geberteils (1) aus ferromagnetischem Material, mittels eines Differential-Hallgebers (2), bestehend aus einer Trägerplatte (5), auf deren einer Seite ein Permanentmagnet (6) angeordnet ist und auf deren anderer Seite zwei Hallelemente (3,4) befestigt sind, welche beide die Zähne oder Segmente (1a) und die dazwischenliegenden Lücken des Geberteils (1) abtasten,
**dadurch gekennzeichnet**,
daß die Magnetisierungsrichtung (7) des Permanentmagneten (6) mit der Normalen (9) auf die Bewegungsrichtung (10) des Geberteils (1) einen vorgegebenen Magnetisierungs-Winkel (β) einschließt.

2. Anordnung nach Anspruch 1,
**dadurch gekennzeichnet**,
daß zusätzlich die senkrecht zur Trägerplatte (5) verlaufende Symmetrieachse (8) des Differential-Hallgebers (2) mit der Normalen (9) auf die Bewegungsrichtung (10) des Geberteils (1) einen vorgegebenen Trägerplatten-Winkel (α) einschließt.

3. Anordnung nach Anspruch 2,
**dadurch gekennzeichnet**,
daß der Magnetisierung-Winkel (β) gleich dem Trägerplatten-Winkel (α) ist.

## Claims

1. Arrangement for contactless detection of the rotational speed or speed or position of a sensor part (1), which part is provided with teeth or at least one segment (1a) and can rotate about an axis or can move in a linear fashion and is made from ferromagnetic material, by means of a differential Hall sensor (2) comprising a carrier plate (5) on one side of which a permanent magnet (6) is arranged and on the other side of which there are secured two Hall elements (3, 4) which both scan the teeth or segments (1a) and the gaps, situated therebetween, of the sensor part (1), characterized in that the direction (7) of magnetization of the permanent magnet (6) encloses with the normal (9) to the direction (10) of movement of the sensor part (1) a prescribed angle (β) of magnetization.

2. Arrangement according to Claim 1, characterized in that in addition the axis (8) of symmetry of the differential Hall sensor (2), which extends at right angles to the carrier plate (5), encloses with the normal (9) to the direction (10) of movement of the sensor part (1) a prescribed carrier plate angle (α).

3. Arrangement according to Claim 2, characterized in that the angle (β) of magnetization is equal to the carrier plate angle (α).

## Revendications

1. Dispositif destiné à la détection sans contact de la vitesse de rotation, de la vitesse ou de la position d'un objet (1) muni de dents ou d'au moins un segment (1a), tournant autour d'un axe ou pouvant avoir un mouvement linéaire, et fabriqué en un matériau ferromagnétique, au moyen d'un capteur différentiel (2) à effet Hall composé d'une plaque support (5) sur une face de laquelle est disposé un aimant permanent (6) et sur l'autre face de laquelle sont fixés deux éléments (3,4) à effet Hall détectant tous les deux les dents ou segments (la) et les vides intercalés de l'objet (1),
caractérisé en ce que
le sens d'aimantation (7) de l'aimant permanent (6) fait, avec la normale (9) au sens de déplacement (10) de l'objet (1), un angle (β) de magnétisation prédéterminé.

2. Dispositif suivant la revendication 1, caractérisé en ce que, en outre, l'axe de symétrie (8), s'étendant parallèlement à la plaque support (5), du capteur différentiel (2) à effet Hall fait, avec la normale (9) au sens de déplacement (10) de l'objet (1), un angle (α) de plaque de support prédéterminé.

3. Dispositif suivant la revendication 2, caractérisé en ce que l'angle (β) d'aimantation est identique à l'angle (α) de plaque de support.
